# EUROPEAN PATENT APPLICATION

(11) **EP 4 654 462 A1**
(43) Date of publication of application: **26.11.2025**
(21) Application number: 23917470.9
(22) Date of filing: 18.01.2023
(51) Int. Cl.: H02P 27/06

(54) **MOTOR DRIVING DEVICE**

(71) Applicant: Carrier Japan Corporation, Tokyo 141-0032 (JP)
(72) Inventor: MATSUMOTO, Hiroaki, Fuji-shi, Shizuoka 416-8521 (JP); HAYASAKA, Yasuharu, Fuji-shi, Shizuoka 416-8521 (JP); OGAWA, Junki, Fuji-shi, Shizuoka 416-8521 (JP)
(74) Representative: Gramm, Lins & Partner Patent- und Rechtsanwälte PartGmbB
(86) International application number: PCT/JP2023/001344
(87) International publication number: WO 2024/154257

(57) **Abstract**

A motor drive device connected to a motor having three phase windings comprises a switching circuit and a controller. The switching circuit includes a plurality of series circuits of switch elements on an upstream side along a direction of application of a DC voltage and switch elements on a downstream side, and the phase windings are connected to interconnection points of the switch elements in these series circuits. The controller sequentially switches a plurality of conduction paths through which current flows in a predetermined direction of the respective phase windings through the respective switch elements, and determines whether there is a short-circuiting in each of the phase windings based on the state of the current flowing between the switching circuit and the motor.

## Description

### Technical Field

Embodiments of the present invention relate to a motor drive device for a motor having multiple phase windings.

### Background Art

A motor drive device connected to a motor having multiple phase windings comprises a switching circuit that converts a DC voltage into an AC voltage by switching. This switching circuit contains a plurality of series circuits of switch elements that are on an upstream side and switch elements on a downstream side along a direction of application of DC voltage. The interconnection point of each switch element in these series circuits is connected to each respective phase winding of the motor.

### Citation List

### Patent Literature

Patent Literature 1: JP 2019-187187 A

### Summary of Invention

### Technical Problem

Each phase winding of the motor is formed by winding an insulated copper wire or aluminum wire. If the insulating film is scratched, a short circuit may occur in part of each phase winding through the scratch. If a short-circuiting occurs, the motor cannot be driven properly. In the case where such a motor is driven with a switching circuit such as an inverter, if the motor cannot be driven, a cause thereof may be considered to be the short-circuiting of the phase windings described above or a failure of the switching circuit. As a measure for repairment, if a short-circuiting occurs in the phase windings, the motor is replaced, whereas if the switching circuit fails, the switching circuit is replaced. Since the repair measures differ depending on the cause of the failure as such, it is desirable to identify the cause of the failure.

An object of the embodiments of the present invention is to provide a motor drive device which can detect abnormalities in the phase windings of a motor driven by a switching circuit.

### Solution to Problem

The motor drive devices of the embodiments are of a type connected to a motor having multiple phase windings and including a switching circuit and a controller. The switching circuit includes a plurality of series circuits of switch elements that are on an upstream side and a downstream side along a direction of application of DC voltage, and each of the phase windings is connected to an interconnection point of each switch element of the series circuits. The controller sequentially switches multiple conductive paths in which current flows in a predetermined direction through each of the switch elements, and determines for each phase winding as to whether it is short-circuited based on the state of the current flowing between the switching circuit and the motor at that time.

### Brief Description of Drawings

FIG. 1 is a circuit block diagram showing a brief configuration of motor drive devices of the embodiments.
FIG. 2 is a flowchart showing the control of the first embodiment.
FIG. 3 is a flowchart that follows FIG. 2.
FIG. 4 is a diagram showing a current during a W-phase check in the embodiment.
FIG. 5 is a diagram showing a switching pattern and a change in current during the W-phase check in the embodiment.
FIG. 6 is a diagram showing the current during a V-phase check in the embodiment.
FIG. 7 is a diagram showing the current during a U-phase check in the embodiment.
FIG. 8 is a diagram showing the current during an X-phase check in the embodiment.
FIG. 9 is a diagram showing the current during a Z-phase check in the embodiment.
FIG. 10 is a diagram showing the current during a Y-phase check in the embodiment.
FIG. 11 is a diagram showing the switching pattern for each of the phase checks in the embodiment.
FIG. 12 is a diagram showing an example of the determination results in the embodiment.
FIG. 13 is a diagram showing the direction of the current flowing through each phase winding by the W-phase check when there is no short-circuiting in each phase winding in the first embodiment.
FIG. 14 is a diagram showing the direction of the current flowing through each phase winding by the V-phase check when there is no short-circuiting in each phase winding in the first embodiment.
FIG. 15 is a diagram showing the direction and magnitude of the current flowing through each phase winding when there is no short-circuiting in each of the phase windings in the first embodiment, two currents that normally flow in the same direction, whether or not there is a flow in the reverse direction from the normal direction for the two currents, and the ratio P of the two currents.
FIG. 16 is a diagram showing the direction and magnitude of the current flowing through each phase winding when there is a short-circuiting in any of the phase windings in the first embodiment, whether or not there is a flow in the reverse direction from the normal direction for the two currents which flow normally in the same direction, and the ratio P of the two currents.
FIG. 17 is a diagram showing the direction and magnitude of each of currents Iw, Iv, and Iu in the first embodiment when there is a short-circuiting in phase winding Lw.
FIG. 18 is a flowchart showing the control of main parts of the second embodiment.
FIG. 19 is a diagram showing the direction and magnitude of the current flowing through each phase winding when there is a short-circuiting in any of the phase windings in the second embodiment, whether there is a flow in the reverse direction from the normal direction for the two currents which flow normally in the same direction, and the ratio P of the two currents.
FIG. 20 shows the direction and magnitude of each of currents Iw, Iv, and Iu in the third embodiment when there is an abnormality in a switch element Tv or phase winding Lv.
FIG. 21 is a flowchart showing the control of the fourth embodiment.

### Mode for Carrying Out the Invention

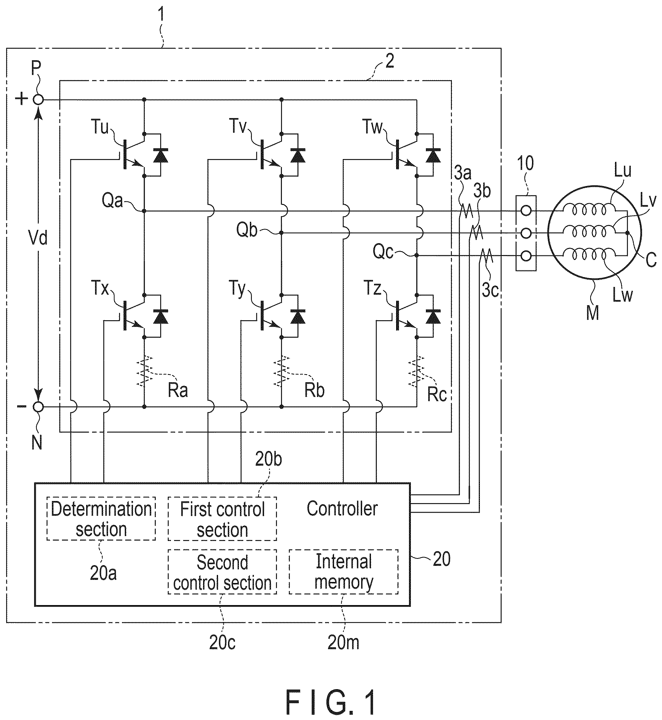

Four representative embodiments of the present invention will now be described. Note that FIGS. 1 and 4 to 12 are common to each embodiment.

### [1] First Embodiment

The first embodiment of the present invention will be described with reference to the accompanying drawings.

In FIG. 1, a three-phase brushless DC motor(which will be referred to as a motor, hereinafter) M used as a compressor motor of an air conditioner includes a stator having three phase windings Lu, Lv, and Lw connected in a star configuration centered on the neutral point C, and a rotor having permanent magnets. Note that the phase windings Lu, Lv, and Lw may be either concentrated or distributed windings. The interaction between the magnetic field generated by the current flowing through the phase windings Lu, Lv, and Lw and the magnetic field created by the permanent magnets causes the rotor to rotate. The unconnected ends of the phase windings Lu, Lv, and Lw are connected to the motor drive device 1 of this embodiment via motor terminals 10. Note that the winding configuration of the motor M may as well a delta connection.

The motor drive device 1 comprises input terminals P and N to which a DC voltage Vd is applied, a switching circuit 2 that supplies current to the phase windings Lu, Lv, and Lw and switches the current supply in reply to the DC voltage Vd between the input terminals P and N, a control unit 20 that controls the switching circuit 2, current sensors 3a, 3b, and 3c that detect the currents (phase winding currents) flowing through the conductive paths between the switching circuit 2 and the phase windings Lu, Lv, and Lw, respectively, and a control unit 20 that controls the switching circuit 2. As to the current sensors 3a, 3b, and 3c, any one of them may be omitted to leave two, and the current of the phase without a current sensor may be calculated by operation based on the detection results of the two current sensors.

The switching circuit 2 includes a series circuit of a switch element Tu on the upstream side and a switch element Tx on the downstream side along the direction of application of the DC voltage Vd, a series circuit of a switch element Tv on the upstream side and a switch element Ty on the downstream side along the direction of application of the DC voltage Vd, and a series circuit of a switch element Tw on the upstream side and a switch element Tz on the downstream side along the direction of application of the DC voltage Vd.

The non-connected end of the phase winding Lu is connected to the interconnection point (an output terminal Qa) between the switch elements Tu and Tx via the motor terminal 10. The non-connected end of the phase winding Lv is connected to the interconnection (output terminal) Qb between the switch elements Tv and Ty via the motor terminal 10. The non-connected end of the phase winding Lw is connected to the interconnection (output terminal) Qc between the switch elements Tw and Tz via the motor terminal 10.

The control unit 20 controls the start and stop of the motor M through the switching circuit 2, detects the rotational state of the rotor based on the phase winding current of the motor M and the like, and controls each switch element of the switching circuit 2 in accordance with the detection results, to operate the motor M at a target frequency. Further, the control unit 20 determines whether there is an abnormality in the switching circuit 2 or an abnormality in the motor M before starting the motor M. The control unit 20 includes, as main functions for this determination, a determination section 20a, a first control section 20b, and a second control section 20c.

The determination section 20a measures the current flowing through between the switching circuit 2 and the motor M while switching among a plurality of conduction paths (first to sixth conduction paths) sequentially for a fixed time t to each, in which the currents flow in predetermined directions of the phase windings Lu, Lv, Lw through the switching elements Tu to Tz of the switching circuit 2, and determines whether there is an abnormality in the switching elements Tu to Tz and/or the motor M based on the state of the current.

Before switching the conduction paths (the first to sixth conduction paths) by the determination section 20a, the first control section 20b applies a counterphase voltage for canceling the current flowing between the switching circuit 2 and the motor M, to the phase windings Lu, Lv, Lw through the switching elements Tu to Tz of the switching circuit 2, for the same fixed time t as the set time of the conduction path set immediately before the switching, thereby to attenuate the current in the phase windings, and thus the time taken for the determination of an abnormality is shortened. This action of applying the counterphase voltage is referred to as a "zero-phase reset operation".

The second control section 20c causes the determination section 20a to execute the determination before starting the motor M, and when the result of the determination indicates that there is no abnormality, control section 20c starts the motor M, whereas when the result of the determination indicates that there is an abnormality, it does not start the motor M.

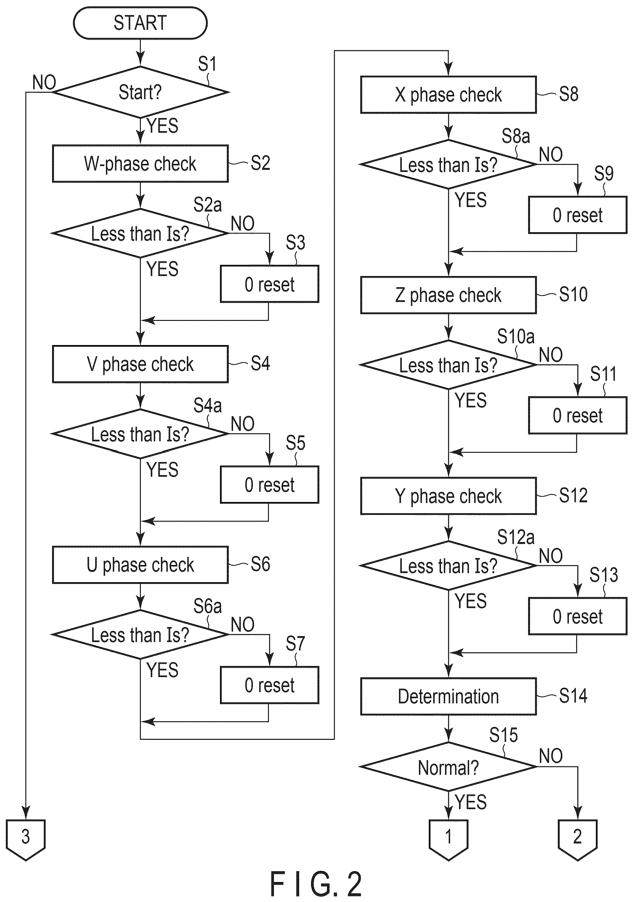

The control to be executed by the controller 20 will be described with reference to the flowchart in FIG. 2.

### (W-phase check)

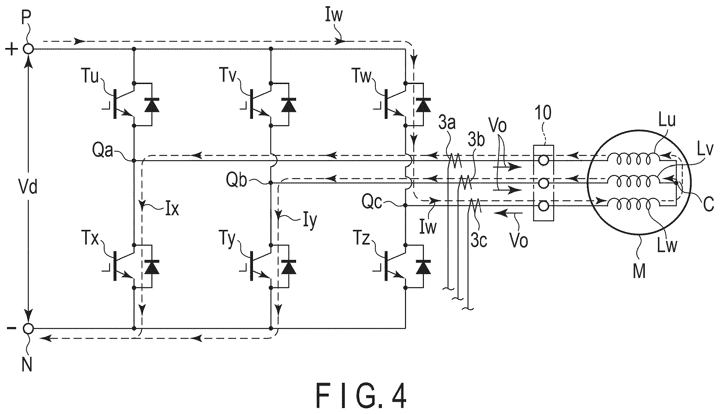

When starting the motor M (YES in S1), the controller 20 performs a W-phase check (S2). Specifically, the controller 20 supplies a pulse-shaped gate signal that turns switch elements Tw, Tx, and Ty on and turns switch elements Tu, Tv, and Tz off for a fixed time t, and sets a first conduction path for the W-phase check, through which current flows from the positive-side terminal P to the switch element Tw -> the interconnection point Qc -> the phase winding Lw -> the phase windings Lu and Lv -> the interconnection points Qa and Qb -> the switch elements Tx and Ty -> the negative-side terminal N as shown by the dashed lines and arrows in FIG. 4. Note that the upstream-side switching elements Tu, Tv, Tw and the downstream-side switching elements Tx, Ty, Tz, which are connected in series, are controlled so that they are complementary to each other, respectively, that is, when one side is on, the other side is off, except during the dead time period when both sides are off, described later. The controller 20, while monitoring the state of the current flowing between the switching circuit 2 and the motor M using the current sensors 3a, 3b, and 3c, stores the results of the monitoring in the internal memory 20m.

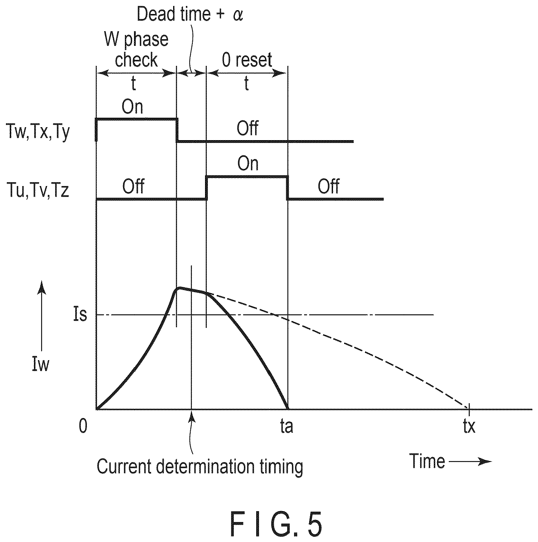

In this monitoring, the controller 20 determines whether or not the value of the current flowing between the switching circuit 2 and the motor M (the absolute value, which is regardless of the direction of flow), that is, specifically, whether the value of a current Iw flowing in the W phase to be checked, is in a state of being below a threshold Is shown in FIG. 5 (S2a). In the W phase check, the current Iw indicates the largest value among the currents flowing in the phases.

If the current Iw is below the threshold Is (YES in S2a), the controller 20 determines that there is an abnormality and comprehensively determines the contents of the abnormality in the subsequent determination process (S14). In this case, since the current Iw is not flowing or is sufficiently small if any, the controller 20 proceeds to the next V-phase check without performing a 0-reset operation (S4). When a 0-reset operation is performed while the current Iw is not flowing or is sufficiently small, a current is generated to flow in the reverse direction, making it not possible to perform an accurate determination subsequently. Therefore, the 0-reset operation, which will be described later, is omitted.

When the current is equal to or greater than the threshold value Is (NO in S2a), the controller 20 executes a 0 (zero) reset operation having a switching pattern opposite to that of the W-phase check (S3). Specifically, the controller 20 supplies a pulse-shaped gate signal that turns on the switching elements Tu, Tv, Tz and turns off switch elements Tw, Tx, and Ty, over the same time period as the set time (fixed time t) of the first conduction path, and thereby applying a counterphase voltage Vo to the phase windings Lu, Lv, and Lw to cancel the current flowing between the switching circuit 2 and the motor M, as indicated by the solid arrows in FIG. 4. By applying the counterphase voltage Vo, the current flowing between the switching circuit 2 and the motor M can be rapidly attenuated by the W-phase check.

FIG. 5 shows the switching of the W-phase check and the switching of the 0-reset operation, as well as changes in the current Iw flowing from the switching element Tw to the phase winding Lw due to these switching operations. A "dead time + α" period is ensured between the W-phase check and the 0-reset operation, and a current determination timing is set to determine whether the current is below the threshold Is during this "dead time + α" period. The time required for the current Iw to decrease to near zero under normal conditions is long as a time tx, as shown by the dashed line, if there is no 0-reset operation. On the other than, when the 0-reset operation is added, this time is significantly shortened to a time ta, which is significantly shorter than the time tx. In other words, by adding the 0-reset operation, the time required for abnormal checks before starting the motor M can be shortened. As a result, the motor M can be started quickly when it is normal.

Since the application time of the counterphase voltage Vo by the 0-reset operation is approximately the same as the set time (fixed time t) of the first conduction path immediately preceding it, the current Iw can be rapidly reduced to substantially "0". If the application time of the counterphase voltage Vo by the 0-reset operation is shorter than the set time (fixed time t) of the first conduction circuit immediately preceding it, the time required to reduce the current Iw down to "0" is prolonged by the time difference. Conversely, if the application time of the counterphase voltage Vo by the 0-reset operation is longer than the set time (fixed time t) of the first conduction circuit immediately preceding it, the current Iw exceeds "0" to flow in the reverse direction to that preceding case.

After the 0-reset operation, the controller 20 proceeds to the next V-phase check (S4).

### (V-phase check)

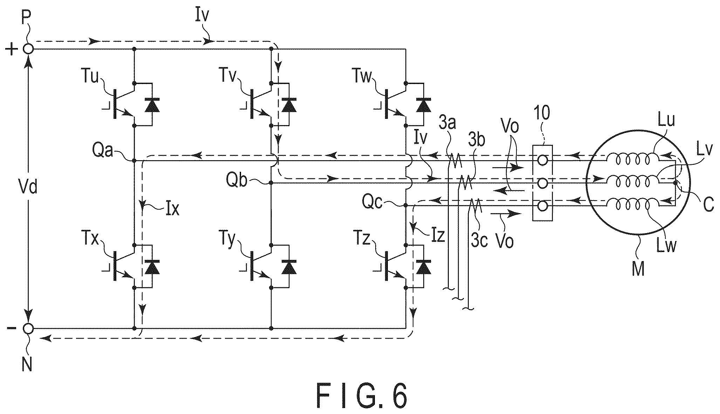

In the V-phase check (S4), the controller 20 supplies a pulse-shaped gate signal that turns on the switch elements Tv, Tx, and Tz and turns off the switch elements Tu, Tw, Tz off for a fixed time t, and thereby sets a second conduction path for the V-phase check, in which the current flows from the positive-side terminal P through the switch element Tv -> the interconnection point Qb -> the phase winding Lv -> the phase windings Lu, Lw -> the interconnection points Qa, Qc -> the switch elements Tx, Tz -> the negative-side terminal N, as shown by the dashed lines and arrows in FIG. 6. Then, the controller 20, while monitoring the state of the current flowing between the switching circuit 2 and the motor M using the current sensors 3a, 3b, and 3c, stores the results of the monitoring in the internal memory 20m.

In this monitoring, the controller 20 determines whether or not the value of the current Iw flowing in the V phase to be checked is in a state of being less than the threshold value Is (S4a). In the V phase check, the current Iv indicates the largest value among the currents flowing in the phases.

When switching to the V-phase check, since the 0-reset operation in step S3 is already executed immediately beforehand to cancel off the current Iw from the W-phase check, or the current Iw by the W-phase check is below the threshold value Is, and therefore the state of the current flowing between the switching circuit 2 and the motor M can be accurately confirmed without being interfered with by the current Iw from the W-phase check.

If the current Iv is below the threshold Is (YES in S4a), the controller 20 determines that there is an abnormality and comprehensively determines the contents of the abnormality in the subsequent determination process (S14). In this case, since the current Iv is not flowing or is flowing at a sufficiently small level, the controller 20 does not perform the 0-reset operation to attenuate the current and proceeds to the next U-phase check (S6).

When the current Iv is equal to or greater than the threshold value Is (NO in S4a), the controller 20 executes the 0-reset operation having a switching pattern reverse to that of the V-phase check (S5). Specifically, the controller 20 turns on the switching elements Tu, Tw, and Ty for a time nearly equal to the second conduction circuit setting time (a fixed time t), and turns off the switching elements Tv, Tx, Tz, thereby applying an counterphase voltage Vo to the phase windings Lu, Lv, and Lw to cancel the current flowing between the switching circuit 2 and the motor M, as shown by the solid arrows in FIG. 6. By applying this counterphase voltage Vo, the current flowing between the switching circuit 2 and the motor M can be rapidly attenuated by the V-phase check.

After the 0-reset operation, the controller 20 proceeds to the next U-phase check (S6).

### (U-phase check)

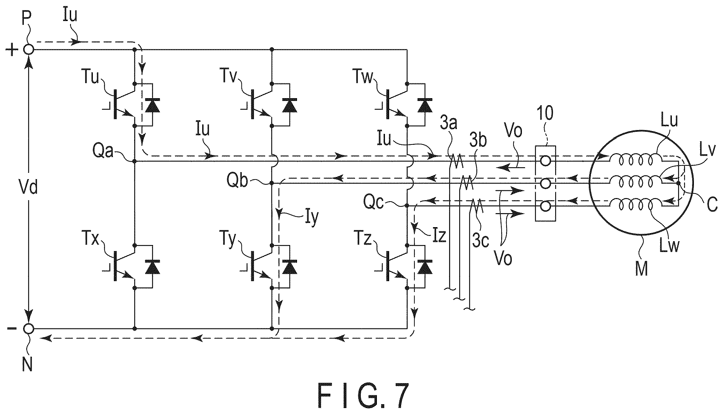

In the U-phase check (S6), the controller 20 supplies a pulse-shaped gate signal that turns on the switch elements Tu, Ty, and Tz and turns off the switch elements Tv, Tw, and Tx for a fixed time t, thereby turning on the switch elements Tu, Ty, and Tz and turning off the switch elements Tv, Ttw, and Tx, and thus sets the third conduction path in which the current flows from the positive-side terminal P through the switch element Tu -> the interconnection point Qa -> the phase winding Lu -> the phase windings Lv, Lw -> the interconnection points Qb, Qc -> the switch elements Ty, Tz -> the negative-side terminal N, as shown by the dashed lines and arrows in FIG. 7. Then, the controller 20, while monitoring the state of the current flowing between the switching circuit 2 and the motor M using the current sensors 3a, 3b, and 3c, stores the results of the monitoring in the internal memory 20m.

In this monitoring, the controller 20 determines whether or not the value of the current Iu flowing in the U phase to be checked is in a state of being less than the threshold value Is (S6a). In the U phase check, the current Iu indicates the largest value among the currents flowing in the phases.

When switching to the U-phase check, the 0-reset operation in step S5 is already executed immediately beforehand to cancel the current Iv by the V-phase check, or the current Iv by the V-phase check is below the threshold value Is, and therefore the state of the current flowing between the switching circuit 2 and the motor M can be accurately confirmed without being interfered with by the current Iv by the V-phase check.

If the threshold value Iu is below the threshold value Is (YES in S6a), the controller 20 determines that there is an abnormality and comprehensively determines the contents of the abnormality in the subsequent determination process (S14). In this case, the controller 20 is in a state where the current Iu is not flowing or is flowing but is sufficiently small, it does not perform a 0-reset operation to attenuate the current and proceeds to the next X-phase check (S8).

When the current is equal to or greater than the threshold value Is (NO in S6a), the controller 20 executes a 0-reset operation having a switching pattern reverse to that of the U-phase check (S7). Specifically, the controller 20 supplies a pulse-shaped gate signal that turns on the switching elements Tv, Tw, and Tx and turns off the switching elements Tu, Ty and Tz for approximately the same time period as the set time of the third conduction circuit (fixed time t), and thereby add an counterphase voltage Vo to the phase windings Lu, Lv, and Lw to cancel out the current flowing between the switching circuit 2 and the motor M, as shown by the solid arrows in FIG. 7. By applying this counterphase voltage Vo, the current flowing between the switching circuit 2 and the motor M can be rapidly attenuated by the U-phase check.

After the 0-reset operation, the controller 20 proceeds to the next X-phase check (S8).

### (X-phase check)

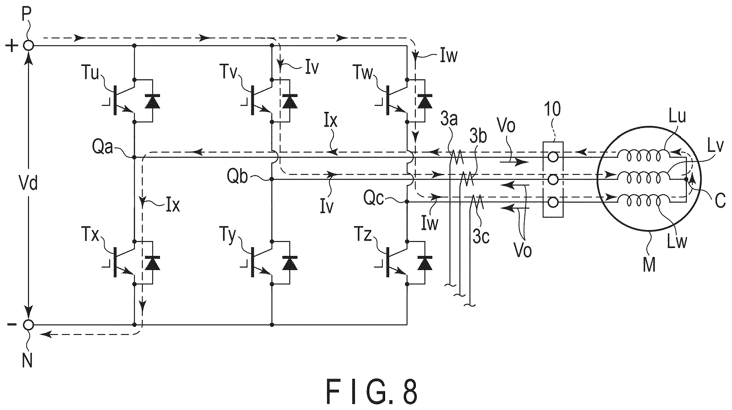

In the X-phase check (S8), the controller 20 supplies a pulse-shaped gate signal that turns on the switch elements Tv, Tw, and Tx and turns off the switch elements Tu, Ty, and Tz for a fixed time t, and thereby sets the fourth conduction path in which the current flows from the positive-side terminal P through the switch elements Tv, Tw -> the interconnection points Qb, Qc -> the phase windings Lv, Lw -> the phase winding Lu -> the interconnection point Qa -> the switch element Tx -> the negative-side terminal N, as indicated by the dashed lines and arrows in FIG. 8. Then, the controller 20, while monitoring the state of the current flowing between switching circuit 2 and motor M using the current sensors 3a, 3b, and 3c, and stores the results of the monitoring in internal memory 20m.

In this monitoring, the controller 20 determines whether or not the value of the current Ix (= -Iu) flowing in the X phase to be checked is in a state of being less than the threshold value Is (S8a). In the X phase check, the current Ix indicates the largest value among the currents flowing in the phases.

When switching to the X-phase check, the 0-reset operation in step S7 is executed immediately beforehand to cancel out the current Iu by the U-phase check, or the current Iu by the U-phase check is in a state of being below the threshold value Is, and therefore the state of the current flowing between the switching circuit 2 and the motor M can be accurately confirmed without being interfered with by the current Iu by the U-phase check.

When the threshold value Ix is below the threshold value Is (YES in S8a), the controller 20 determines that there is an abnormality and comprehensively determines the contents of the abnormality in the subsequent determination process (S14). In this case, the controller 20 is in a state where the current Ix is not flowing or is flowing but is sufficiently small, it does not perform a 0-reset operation to attenuate the current and proceeds to the next Z-phase check (S10).

If the current Ix is equal to or greater than the threshold value Is (NO in S8a), the controller 20 executes a 0-reset operation having a switching pattern reverse to that of the X-phase check (S9). Specifically, the controller 20 supplies a pulse-shaped gate signal that turns on the switching elements Tu, Ty, and Tz and turns off the switching elements Tv, Ttw, and Tx, for approximately the same time period as that of the set time (fixed time t) of the fourth conduction circuit, and adds a counterphase voltage Vo to the phase windings Lu, Lv, and Lw to cancel the current flowing between the switching circuit 2 and the motor M, as shown by the solid arrows in FIG. 8. By applying the counterphase voltage Vo, the current flowing between the switching circuit 2 and the motor M can be rapidly attenuated by the X-phase check.

After the 0-reset operation, the controller 20 proceeds to the next Z-phase check (S10).

### (Z-phase check)

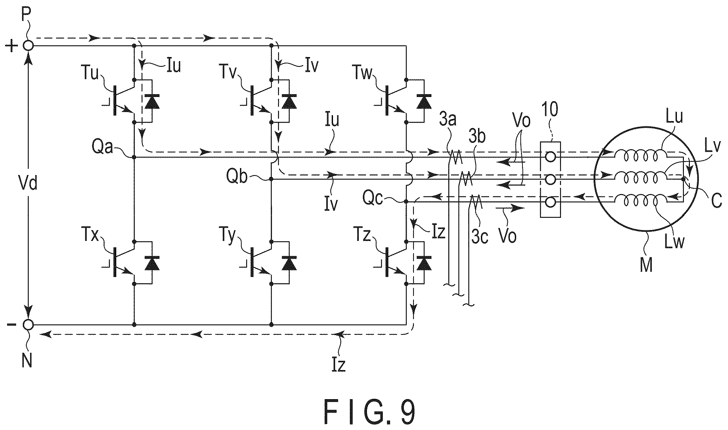

In the Z-phase check (S10), the controller 20 supplies a pulse-shaped gate signal that turns on the switching elements Tu, Tv, and Tz and turns off the switching elements Tw, Tx, and Ty for a fixed time t, and thereby sets the fifth conduction path in which the current flows from the positive-side terminal P to the switching elements Tu, Tv -> the interconnection points Qa, Qb -> the phase windings Lu, Lv -> the phase winding Lw -> the interconnection point Qc -> the switch element Tz -> the negative-side terminal N, as indicated by the dashed lines and arrows in FIG. 9. Then, the controller 20, while monitoring the state of the current flowing between the switching circuit 2 and the motor M using the current sensors 3a, 3b, and 3c, and stores the results of the monitoring in the internal memory 20m.

In this monitoring, the controller 20 determines whether the value of the current Iz (= -Iw) flowing in the Z phase to be checked is in a state of being less than the threshold value Is (S10a). In the Z phase check, the current Iz indicates the largest value among the currents flowing in the phases.

When switching to the Z-phase check, the 0-reset operation in step S9 is already executed immediately beforehand, the current Ix by the X-phase check is canceled, or the current Ix by the X-phase check is below the threshold value Is, and therefore the state of the current flowing between the switching circuit 2 and the motor M can be accurately confirmed without being interfered with by the current Ix by the X-phase check.

When the threshold Iz is below the threshold Is (YES in S10a), the controller 20 determines that there is an abnormality and comprehensively determines the contents of the abnormality in the subsequent determination process (S14). In this case, since the controller 20 is in a state where the current Iz is not flowing or is flowing but sufficiently small, it does not perform a 0-reset operation to attenuate the current and proceeds to the next Y-phase check (S12).

When the current Iz is equal to or greater than the threshold value Is (NO in S10a), the controller 20 executes a 0-reset operation having a switching pattern reverse to that of the Z-phase check (S11). Specifically, the controller 20 supplies a pulse-shaped gate signal that turns on the switching elements Tw, Tx, and Tz and turns off the switching elements Tz, Tx, and Tw, for approximately the same time period as that of the set time (fixed time t) of the fifth conduction circuit, and adds a counterphase voltage Vo to the phase windings Lu, Lv, and Lw to cancel the current flowing between the switching circuit 2 and the motor M, as shown by the solid arrows in FIG. 9. By applying this counterphase voltage Vo, the current flowing between the switching circuit 2 and the motor M can be rapidly attenuated by the Z-phase check.

After the 0-reset operation, the controller 20 proceeds to the next Y-phase check (S12).

### (Y-phase check)

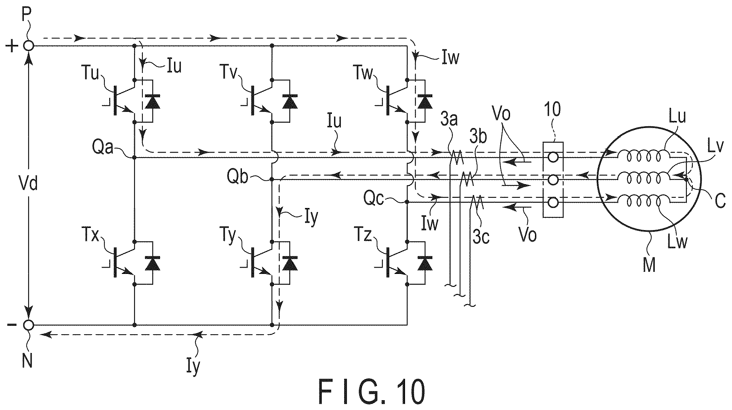

In the Y-phase check (S12), the controller 20 supplies a pulse-shaped gate signal that turns on the switch elements Tu, Tw, and Ty and turns off the switch elements Tv, Tx, and Tz for a fixed time t, and thus sets the sixth conduction path in which the current flows from the positive-side terminal P to the switch elements Tu, Tw -> the interconnection points Qa, Qc -> the phase windings Lu, Lw -> the phase winding Lv -> the interconnection point Qb -> the switch element Ty -> the negative-side terminal N, as shown in the dashed lines and arrows in FIG. 10. Then, the controller 20, while monitoring the state of the current flowing between the switching circuit 2 and the motor M using the current sensors 3a, 3b, and 3c, stores the results of the monitoring in the internal memory 20m.

In this monitoring, the controller 20 determines whether the value of the current Iy (= -Iv) flowing in the Y phase to be checked is in a state of being less than the threshold value Is (S12a). In the Y phase check, the current Iy indicates the largest value among the currents flowing in the phases.

When switching to the Y-phase check, the 0-reset operation in step S11 is executed immediately beforehand, and the current Iz by the Z-phase check is canceled out, or the current Iz is below the threshold value Is; therefore the state of the current flowing between the switching circuit 2 and the motor M can be accurately confirmed without being interfered with by the current Iz by the Z-phase check.

When the threshold Iy is below the threshold Is (YES in S12a), the controller 20 determines that there is an abnormality and comprehensively determines the contents of the abnormality in the next determination process (S14). In this case, since the controller 20 is in a state where the current Iy is not flowing or is flowing but sufficiently small, it does not perform a 0-reset operation to attenuate the current and proceeds to the next determination process (S14).

When the current Iy is equal to or greater than the threshold value Is (NO in S12a), the controller 20 executes a 0-reset operation having a switching pattern reverse to that of the Y-phase check (S13). Specifically, the controller 20 applies a pulse-shaped gate signal that turns on the switching elements Tv, Tx, and Tz and turns off the switching elements Tu, Ttw, and Ty, for approximately the same time period as the set time (fixed time t) of the sixth conduction path, and adds a counterphase voltage Vo to the phase windings Lu, Lv, and Lw to cancel the current flowing between the switching circuit 2 and the motor M, as indicated by the solid arrows in FIG. 10. By applying this counterphase voltage Vo, the current flowing between the switching circuit 2 and the motor M by the Y-phase check can be rapidly attenuated.

After the 0-reset operation, the controller 20 proceeds to the next determination process (S14).

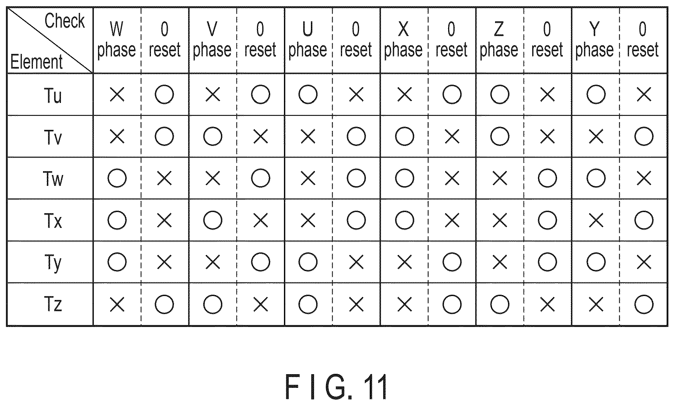

The switching patterns of the phase checks described so far are shown in FIG. 11.

### (Determination process)

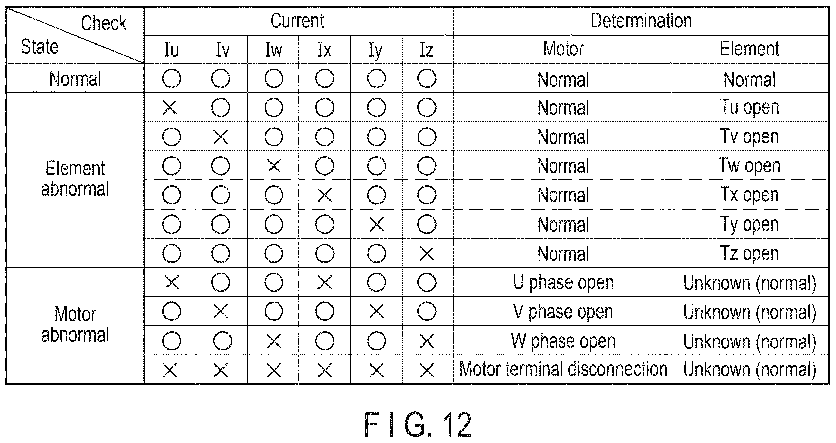

In the determination process (S14), the controller 20 determines whether there is an abnormality in the switching elements Tu to Tz and an abnormality in the motor M based on the results of the monitoring of the current in the phase checks. Examples of the results of the determination result are listed in FIG. 12.

When the current Iu flowing through the switch element Tu is less than the threshold value Is despite the setting of the conduction path running via the switch element Tu, the controller 20 determines that there is an abnormality of open failure in the switch element Tu. When the current Iv flowing through the switch element Tv is less than the threshold value Is despite the setting of the conduction path running via switch element Tv, the controller 20 determines that there is an abnormality of open failure in the switch element Tv. Similarly, when the currents Iw to Iz flowing through the switch elements Tw to Tz, respectively, are less than the threshold value Is despite the setting of the conduction path via the switch elements Tw to Tz, respectively, the controller 20 determines that there is an abnormality of open failure in the switch elements Tw to Tz, respectively.

When the current Iu flowing through the switch element Tu is below the threshold value Is despite the setting of the conduction path via the switch element Tu, and the current Ix flowing through the switch element Tx is below the threshold value Is despite the setting of the conduction path via the switch element Tx, the controller 20 determines that there is an abnormality of disconnection in the phase winding Lu of the motor M, that is, the so-called U-phase open failure.

When the current Iv flowing through the switch element Tv is less than the threshold value Is despite the setting of the conduction path through the switch element Tv, and the current Iy flowing through the switch element Ty is less than the threshold value Is despite the setting of the conduction path via the switch element Ty, the controller 20 determines that there is an abnormality of the disconnection in the phase winding Ly of the motor M, that is, the so-called V-phase open failure.

When the current Iw flowing through the switch element Tw is below the threshold value Is despite the setting of the conduction path via the switch element Tz and the current Iz flowing through the switch element Tz is below the threshold value Is despite the setting of the conduction path via the switch element Tw, the controller 20 determines that there is an abnormality of the disconnection in the phase winding Lz of the motor M, that is, the so-called W-phase open failure.

When the controller 20 cannot detect any of the current Iu to Iz flowing through the switch elements Tu to Tz despite the setting of the conduction path through the switch elements Tu to Tz, the controller 20 determines that there is an abnormality of the disconnection of the motor terminal 10 between the switching circuit 2 and the motor M.

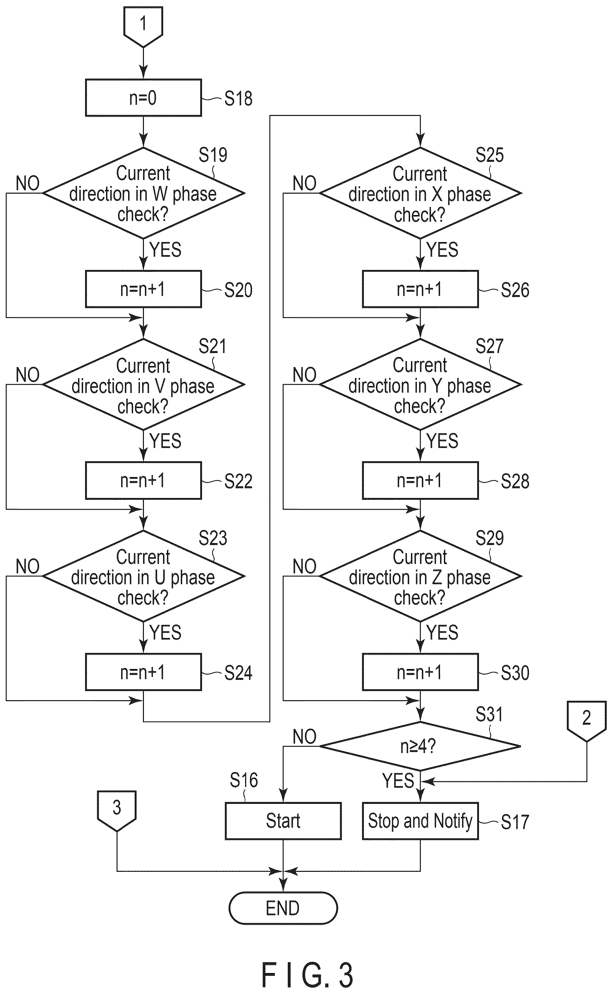

When any of the abnormalities is detected (NO in S15), the controller 20 keeps the motor M in its stopped state without starting it and notifies the user or the like of the contents of the abnormality by, for example, display or communication (S17 in FIG. 3). As this notification method, for example, four major categories listed in the leftmost column of FIG. 12: "No abnormality", "Component abnormality", "Motor abnormality" and "Motor winding short-circuiting" determined by the detection of short-circuiting in the phase windings Lu, Lv, and Lw described later. In this manner, the maintenance personnels can be prepared in advance, that is, they can prepare a replacement inverter circuit board if the notification indicates "Component Abnormal", or can prepare a replacement motor if the notification indicates "Motor Abnormal" or "Motor Winding Short-circuiting". Note that for "motor terminal disconnection" in the "motor abnormality", the repair may be completed merely by checking the wirings and reconnecting the connector. Therefore, it is desirable to report this item separately. Further, depending on the operation and the like, the detailed results of the determination related to the "motor" and "component" in the two columns on the right side of FIG. 12 may be displayed.

Note that the magnitude of the current flowing during each phase check is greatly influenced by the motor constant of the motor M, particularly, the R component of the phase windings. Therefore, it is preferable to set the fixed time t for each of the first to sixth conduction paths in consideration of the components R of the phase windings Lu, Lv, and Lw. Specifically, since the magnitude of the current is inversely proportional to the component R, the motor constant of the motor M is measured in advance, and the set time t is set longer as the component R is larger.

### [Detection of short-circuiting in phase windings Lu, Lv, and Lw]

If the result of the determination process (S14) indicates no abnormality (YES in S15), the controller 20 proceeds to the process shown in S18 to S31 in FIG. 3 to detect short-circuiting caused by insulation failure or the like of the phase windings Lu, Lv, and Lw.

### (Determination of current direction during W phase check)

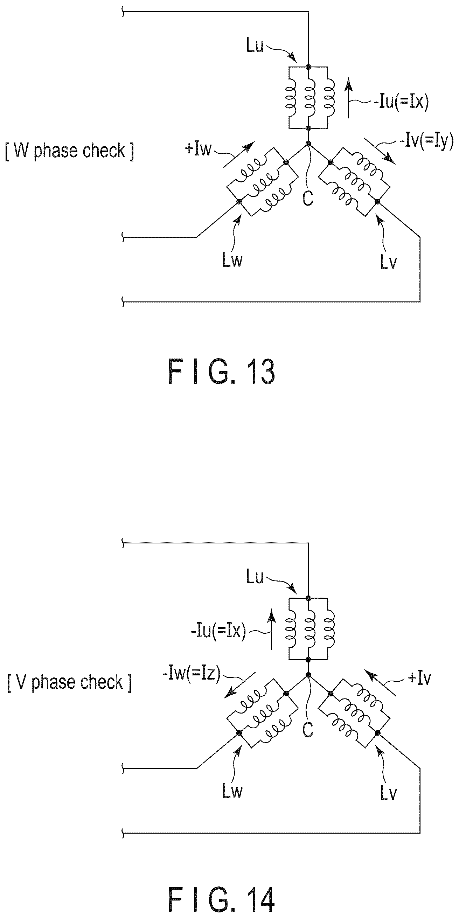

When there is no short-circuiting in the phase windings Lu, Lv, and Lw during the W-phase check, a forward current +Iw flows from the switching circuit 2 through the phase winding Lw toward the neutral point C, and the current +Iw that has passed through the phase winding Lw is split into currents flowing toward the phase winding Lu and the phase winding Lv from the neutral point C as shown in FIG. 13. The split currents become currents -Iu (= Ix) and -Iv (= Iy) in a negative direction (normal direction) flowing through the phase windings Lu and Lv toward the switching circuit 2. That is, during the W-phase check, a current +Iw in a forward-direction flows to one phase winding Lw, and currents -Iu and -Iv in a negative direction flow through two phase windings Lu and Lv.

The ratio P of the currents -Iu and -Iv in the negative direction flowing through the two phase windings Lu and Lv can be calculated as: P = (-Iv/-Iu) when the relationship in magnitude is "-Iu ≥ -Iv" and as: P = (-Iu/-Iv) when the relationship is "-Iu < -Iv".

The thickness and number of turns of the copper wires of the phase windings Lu, Lv, and Lw are designed to be identical. Therefore, when the phase windings Lu, Lv, and Lw are normal products without short-circuiting, the ratio P of the currents -Iu and -Iv in the negative direction flowing through the phase windings Lu and Lv is considered to be a constant value.

Note that when a short-circuiting occurs in either one of the phase windings Lu and Lv, the resistance value of the phase winding with the short-circuiting becomes smaller than that of the phase winding without the short-circuiting. Therefore, the ratio P of the currents -Iu and -Iv in the negative direction flowing through the phase windings Lu and Lv deviates from the constant value. When the ratio P of the two currents -Iu and -Iv deviates from the normal constant value, it is suspected that a short-circuiting may be occurring in either one of the phase windings Lu and Lv. Hereinafter, the ratio P may as well be referred to as a current ratio P.

However, according to various tests conducted by the inventors, it was found that even for normal phase windings Lu, Lv, and Lw without a short-circuiting, there are cases where the current ratio P deviates from the constant value. The cause of this is unclear, but it is considered to be influenced by minor differences in the air gaps (spaces) between the teeth of the stator, which is wound with the phase windings Lu, Lv, and Lw, and the rotor of the three-phase brushless DC motor used as the motor M, or by the magnetic field interaction between the permanent magnets in the rotor and the currents flowing through the phase windings Lu, Lv, and Lw.

Further, according to various tests conducted by the inventors, in the cases where there was a short-circuiting in any of the phase windings Lu, Lv, or Lw, it was found that in many cases, a current flows in a direction reverse to the usual direction in either one of the two phase windings in which normally currents of the same direction flow. In these cases, the current ratio P becomes a negative value "-".

In consideration of these test results, the controller 20 sets the abnormality count value n in the internal memory 20m to the initial value "0" (S18) and first determines the current direction in the W-phase check (S19).

Specifically, the controller 20 determines whether there is a flow in the direction (forward) reverse to the normal direction in either of the two currents Iu and Iv, which should normally flow in the same negative direction, among the currents Iu, Iv, and Iw during the W-phase check, held in the internal memory 20m (S19).

When there is a reverse (forward) flow different from the normal in either one of the currents Iu and Iv (YES in S19), the controller 20 determines that there is a short-circuiting in one of the phase windings Lu, Lv, or Lw, and adds "1" to the abnormality count value n (S20). Then, it proceeds to the determination of the current direction for the next V-phase check.

If there is no reverse (forward) flow different from the normal in either one of the currents Iu and Iv (NO in S19), the controller 20 does not make any addition to the abnormality count value and proceeds to the determination of the current direction in the next V-phase check (S21).

### (Determination of current direction in V-phase check)

When there is no short-circuiting in the phase windings Lu, Lv, and Lw, a forward current +Iv flows from the switching circuit 2 through the phase winding Lv toward the neutral point C, and the current +Iv that has passed through the phase winding Lv is split into a phase winding Lu and a phase winding Lw from the neutral point C during the V-phase check, as shown in FIG. 14. The split currents become backward currents (normal direction) of -Iu (= Ix) and -Iw (= Iw) toward the switching circuit 2 via the phase windings Lu and Lw. Thus, during the V-phase check, a forward current +Iv flows through one phase winding Lv, and backward current s -Iu and -Iw flow via the two phase windings Lu and Lw.

The ratio (current ratio) P of backward currents -Iu and -Iw flowing through the two phase windings Lu and Lw can be calculated as: P = (-Iw / -Iu) if the relationship in magnitude is "-Iu ≥ -Iw" and as: P = (-Iu / -Iw) if the relationship in magnitude is "-Iu < -Iw".

The controller 20 determines whether or not there is a reverse (forward) flow different from the normal in either one of the two currents Iu and Iw, which normally should flow in the same negative direction, among the currents Iu, Iv, and Iw during the V-phase check held in the internal memory 20m (S21).

When there is a reverse (forward) flow different from the normal in either one of the currents Iu and Iw (YES in S21), the controller 20 determines that there is a short-circuiting in any one of the phase windings Lu, Lv, and Lw, and adds "1" to the abnormality count value n (S22). Then, it proceeds to the determination of the current direction in the next U-phase check (S23).

When there is no reverse (forward) flow different from the normal in either one of the currents Iu and Iw (NO in S21), the controller 20 does not adds the abnormality count value n and proceeds to the determination of the current direction in the next U-phase check (S23).

### (Determination of current direction in U-phase check)

When there is no short-circuiting in the phase windings Lu, Lv, and Lw, a forward current +Iu flows from the switching circuit 2 through the phase winding Lu toward the neutral point C, and the current +Iu that has passed through the phase winding Lu is split into a phase winding Lv and a phase winding Lw from the neutral point C during the U-phase check. The split currents become reverse (normal) currents -Iv (= Iy) and -Iw (= Iw) flowing toward the switching circuit 2 via the phase windings Lv and Lw, respectively. That is, during the U-phase check, a forward current +Iu flows through one phase winding Lu, and backward currents -Iv and -Iw flow through the two phase windings Lv and Lw.

The ratio (current ratio) P of the backward currents -Iv and -Iw flowing through the two phase windings Lv and Lw is calculated as: P = (-Iw / -Iv) if the relationship in magnitude is "-Iv ≥ -Iw", and as: P = (-Iv / -Iw) if the relationship in magnitude is "-Iv < -Iw".

The controller 20 determines whether or not there is a reverse (forward) flow different from the normal in either one of the two currents Iu and Iw, which normally should flow in the same reverse direction, among the currents Iu, Iv, and Iw during the V-phase check, held in the internal memory 20m (S23).

When there is a reverse (forward) flow different from the normal in either one of the currents Iv and Iw (YES in S23), the controller 20 determines that there is a short-circuiting in any one of the phase windings Lu, Lv, and Lw, and adds "1" to the abnormality count value n (S24). Then, it proceeds to the determination of the current direction in the next X-phase check (S25).

When there is no reverse (forward) flow different from the normal in either one of the current Iv and Iw (NO in S23), the controller 20 does not make any addition to the abnormality count value n and proceeds to the determination of the current direction in the next X-phase check (S27).

### (Determination of current direction in X-phase check)

When there is no short-circuiting in the phase windings Lu, Lv, and Lw, forward currents +Iv and +Iw flow from the switching circuit 2 through the phase windings Lv and Lw toward the neutral point C, and the currents +Iv and +Iw that have passed through the phase winding Lv and Lw are merged into a phase winding Lu from the neutral point C during the X-phase check. The merged current becomes a reverse (normal) current -Iu (= Ix) flowing toward the switching circuit 2 via the phase winding Lu. That is, during the X-phase check, forward currents +Iv and +Iw flow through the two phase windings Lv and Lw, and a backward current -Iu flows through one phase winding Lu.

The ratio (current ratio) P of the forward currents +Iv and +Iw flowing through the two phase windings Lv and Lw can be calculated as: P = (+Iw / +Iv) if the relationship in magnitude is "+Iv ≥ +Iw", and as: P = (+Iv / +Iw) if the relationship in magnitude is "+Iv < +Iw".

The controller 20 determines whether or not there is an abnormal reverse (backward) flow in either one of the two currents Iv and Iw, which normally should flow in the same reverse direction, among the currents Iu, Iv, and Iw during the X-phase check, held in the internal memory 20m (S25).

When there is an abnormal reverse (backward) flow in either one of the currents Iv and Iw (YES in S25), the controller 20 determines that there is a short-circuiting in any one of the phase windings Lu, Lv, and Lw, and adds "1" to the abnormality count value n (S26). Then, it proceeds to the determination of the current direction in the next Y-phase check (S25).

When there is no reverse (backward) flow different from the normal in either one of the current Iv and Iw (NO in S25), the controller 20 does not make any addition to the abnormality count value and proceeds to the determination of the current direction in the next Y-phase check (S27).

### (Determination of current direction in Y-phase check)

When there is no short-circuiting in the phase windings Lu, Lv, and Lw, forward currents +Iu and +Iw flow from the switching circuit 2 through the phase windings Lu and Lw toward the neutral point C, and the currents +Iu and +Iw that have passed through the phase winding Lu and Lw are merged into a phase winding Lv from the neutral point C during the Y-phase check. The merged current becomes a reverse (normal) current -Iv (= Iy) flowing toward the switching circuit 2 via the phase winding Lv. That is, during the X-phase check, forward currents +Iu and +Iw flow through the two phase windings Lu and Lw, and a backward current -Iv flows through one phase winding Lv.

The ratio (current ratio) P of the forward currents +Iu and +Iw flowing through the two phase windings Lu and Lw can be calculated as: P = (+Iw / +Iu) if the relationship in magnitude is "+Iu ≥ +Iw", and as: P = (+Iu / +Iw) if the relationship in magnitude is "+Iu < +Iw".

The controller 20 determines whether or not there is an abnormal reverse (backward) flow in either one of the two currents Iu and Iw, which normally should flow in the same reverse direction, among the currents Iu, Iv, and Iw during the Y-phase check, held in the internal memory 20m (S27).

When there is an abnormal reverse (backward) flow in either one of the currents Iu and Iw (YES in S27), the controller 20 determines that there is a short-circuiting in any one of the phase windings Lu, Lv, and Lw, and adds "1" to the abnormality count value n (S28). Then, it proceeds to the determination of the current direction in the next Z-phase check (S29).

When there is no abnormal reverse (backward) flow in either one of the current Iu and Iw (NO in S27), the controller 20 does not make any addition to the abnormality count value and proceeds to the determination of the current direction in the next Y-phase check (S29).

### (Determination of current direction in Z-phase check)

When there is no short-circuiting in the phase windings Lu, Lv, and Lw, forward currents +Iu and +Iv flow from the switching circuit 2 through the phase windings Lu and Lv toward the neutral point C, and the currents +Iu and +Iv that have passed through the phase winding Lu and Lv are merged into a phase winding Lw from the neutral point C during the Z-phase check. The merged current becomes a reverse (normal) current -Iw (= Iz) flowing toward the switching circuit 2 via the phase winding Lw. That is, during the Z-phase check, forward currents +Iu and +Iv flow through the two phase windings Lu and Lv, and a backward current -Iw flows through one phase winding Lw.

The ratio (current ratio) P of the forward currents +Iu and +Iv flowing through the two phase windings Lu and Lv can be calculated as: P = (+Iv / +Iu) if the relationship in magnitude is "+Iu ≥ +Iv", and as: P = (+Iu / +Iv) if the relationship in magnitude is "+Iu < +Iv".

The controller 20 determines whether or not there is an abnormal reverse (backward) flow in either one of the two currents Iu and Iv, which normally should flow in the same reverse direction, among the currents Iu, Iv, and Iw during the Z-phase check, held in the internal memory 20m (S29).

When there is an abnormal reverse (backward) flow in either one of the currents Iu and Iv (YES in S29), the controller 20 determines that there is a short-circuiting in any one of the phase windings Lu, Lv, and Lw, and adds "1" to the abnormality count value n (S30). Then, it proceeds to the determination of the abnormality count value n (S31).

When there is no abnormal reverse (backward) flow in either one of the current Iu and Iv (NO in S29), the controller 20 does not make any addition to the abnormality count value and proceeds to the determination of the abnormality count value n (S31).

### (Comparison between abnormality count value n and threshold A)

The controller 20 determines whether or not the final abnormality count value n is equal to or greater than the threshold value A (S31). If the abnormality count value n is less than the threshold value A (NO in S31), the controller 20 determines that there is no short-circuiting in the phase windings Lu, Lv, and Lw (S16) and starts the motor M by switching of the switching circuit 2. In the case of an abnormality, the operation of the motor is prohibited until the motor is replaced, and therefore it is desirable to perform determination at strict level. For this reason, it is recommended to set the threshold A to "4". In the case where a short-circuiting occurs in any one of the phase windings Lu, Lv, and Lw, the current flows in the normal direction in two of the six phase checks during the determination. Thus, the current flows in an abnormal reverse (backward) direction in the cases of at most in four phase checks of the six-phase checks during the determination. Therefore, by setting the threshold A to "4", only the cases where a short-circuiting has definitely occurred in the phase winding Lu, Lv, or Lw can be detected, while excluding the influence of external disturbances.

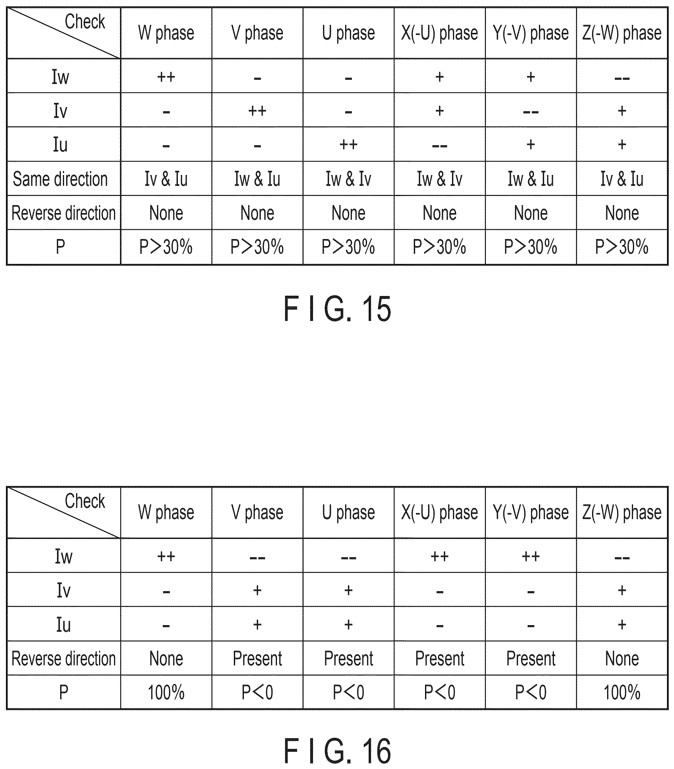

FIG. 15 shows the test results indicating the direction (+/-) and magnitude (the number of + signs/the number of - signs) of each of the currents Iu, Iv, and Iw flowing through the phase windings Lu, Lv, and Lw when there is no short-circuiting in the phase windings Lu, Lv, and Lw, the two currents that normally flow in the same direction, whether or not there is an abnormal reverse flow in either one of the two currents, and the state of the current ratio P between the two currents. In the magnitudes of the currents Iu, Iv, and Iw, the value of the forward direction is larger as the number of "+" sings is greater, whereas the value of the reverse direction is larger as the number of "-" signs is greater.

When the abnormality count value n is equal to or greater than the threshold value A (NO in S31), the controller 20 determines that there is a short-circuiting in any one of the phase windings Lu, Lv, and Lw, and keeps the stopped state of the motor M without starting it. Further, it notifies the user or the like of the contents of the abnormality, that is, "motor winding short-circuiting" which indicates the occurrence of a short-circuiting in any one of the phase windings Lu, Lv, or Lw by means of, for example, display or communication (S17).

FIG. 16 shows the test results indicating the direction (+/-) and magnitude (the number of + signs/the number of - signs) of each of the currents Iu, Iv, and Iw flowing through the phase windings Lu, Lv, and Lw when there is a short-circuiting in the phase windings Lu, Lv, and Lw, whether or not there is an abnormal reverse flow in the two currents that normally flow in the same direction, and the state of the current ratio P between the two currents.

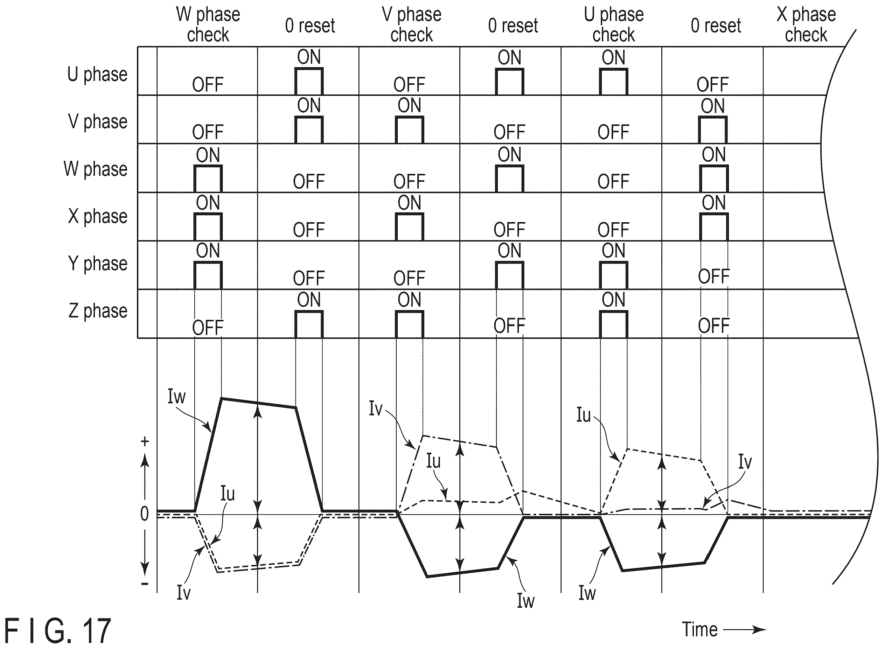

FIG. 17 shows the direction (+/-) and magnitude (absolute value) of each of the currents Iw, Iv, and Iu when there is a short-circuiting in, for example, the phase winding Lw. In the V-phase check, of the two currents Iu and Iw, which should normally flow in the same backward direction, the current Iu is oscillating in the reverse (forward) direction different from the normal. In the the U-phase check, of the two currents Iv and Iw, which should normally flow in the same backward direction, the current Iv is oscillating in the reverse (forward) direction different from the normal.

As described above, during each phase check, it is determined whether there is a flow in the reverse direction from the normal direction occurring in either one of the two currents which normally flow in the same direction, among the currents Iu, Iv, and Iw, for the execution of the phase checks (the formation of the first to sixth conduction path), and the frequency of the reverse flow occurring is counted as an abnormality count value n. Then, if the abnormality count value n is equal to or greater than the threshold value A, it is determined that there is a short-circuiting in any one of the phase windings Lu, Lv, and Lw. With this configuration, it is possible to appropriately detect a short-circuiting in the phase winding Lu, Lv, or Lw without being affected by the magnetic field of the permanent magnet or the like due to the motor being a three-phase brushless DC motor.

In this embodiment, the measurements of the current value using the check current performed for each phase in order to determine element abnormalities and motor abnormalities are reused, thereby determining a short-circuiting in the phase winding Lu, Lv, or Lw. Therefore, it is no longer necessary to supply current to the motor solely and newly for the purpose of determining a short-circuiting in the phase winding Lu, Lv, or Lw.

Note that in this embodiment, as shown in FIGS. 2 and 12, check currents for each phase are applied to carry out determination of element abnormalities and motor abnormalities, and the current values of each phase at each event are temporarily stored in the internal memory 20m. Subsequently, as shown in FIG. 3, the stored current values are used to collectively determine short-circuitings in phase windings Lu, Lv, and Lw. But, it may as well do to determine whether reverse current is flowing immediately after applying the check current to each phase at the same time as that of the determination of element abnormalities and motor abnormalities in each phase.

### [2] Second Embodiment

In the second embodiment, the controller 20 calculates the current ratio P of two of the currents Iu, Iv, and Iw, that normally flow in the same direction for the examination of each phase check (formation of each of the first to sixth conduction paths), counts the frequency at which the calculated current ratio P is equal to or less than a set value X (for example, 10% or less) as an abnormality count value n, and determines that there is a short-circuiting in any one of the phase windings Lu, Lv, and Lw when the abnormality count value n reaches or exceeds the threshold value A. Other controls are the same as those of the first embodiment.

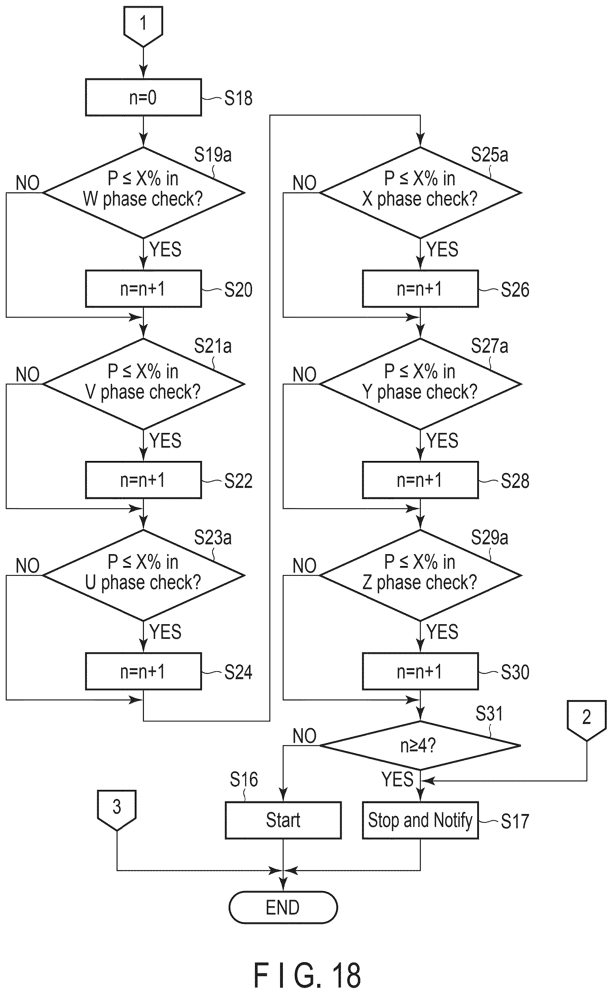

The main parts of the control executed by the controller 20 are shown in the flowchart in FIG. 18, which follows that of FIG. 2. That is, FIG. 18 is a replacement of FIG. 3 in the first embodiment.

### (W-phase check to Y-phase check)

The control of each of the W-phase check to Y-phase check in FIG. 2 is the same as that of the first embodiment. Therefore, the explanation thereof is omitted.

### (Determination of current ratio P in W-phase check)

During the W-phase check, a forward current +Iw flows through one phase winding Lw, and backward currents -Iu and -Iv flow through two phase windings Lu and Lv.

The controller 20 sets the abnormality count value n in the internal memory 20m to the initial value "0" (S18), and first, determines the current ratio P during the W-phase check (S19a).

Specifically, the controller 20 calculates the current ratio P of the backward currents -Iu and -Iv flowing through the two phase windings Lu and Lv as P = (-Iv / -Iu) if the relationship in magniture is "-Iu ≥ -Iv", or as P = (-Iu / -Iv) if the relationship in magnitude is "-Iu < -Iv". When the current ratio P is at or below the set value X (for example, 10% or less) (YES in S19a), the controller 20 determines that there is a short-circuiting in any one of the phase windings Lu, Lv, and Lw, and adds "1" to the abnormality count value n (S20). Then, it proceeds to the determination of the current ratio in the next V-phase check (S21a).

When the current ratio P is not in a state of being at or below the set value (for example, 10% or less) (NO in S19a), the controller 20 does not make any addition to the abnormality count value n and proceeds to the determination of the current ratio P in the next V-phase check (S21a).

### (Determination of current ratio P in V-phase check)

During the V-phase check, a forward current +Iv flows through one phase winding Lv, and backward currents -Iu and -Iw flow through the two phase windings Lu and Lw. The controller 20 determines the ratio P of these currents -Iu and -Iw (S21a).

Specifically, the controller 20 calculates the current ratio P of the backward currents -Iu and -Iw flowing through the two phase windings Lu and Lw as P = (-Iw / -Iu) if the relationship in magniture is "-Iu ≥ -Iw", or as P = (-Iu / -Iw) if the relationship in magnitude is "-Iu < -Iw". When the current ratio P is at or below the set value X (for example, 10% or less) (YES in S21a), the controller 20 determines that there is a short-circuiting in any one of the phase windings Lu, Lv, and Lw, and adds "1" to the abnormality count value n (S22). Then, it proceeds to the determination of the current ratio in the next U-phase check (S23a).

When the calculated current ratio P is not in a state of being at or below the set value (NO in S21a), the controller 20 does not make any addition to the abnormality count value n and proceeds to the determination of the current ratio P in the next V-phase check (S23a).

### (Determination of current ratio P in U-phase check)

During the U-phase check, a forward current +Iu flows through one phase winding Lu, and backward currents -Iv and -Iw flow through the two phase windings Lv and Lw. The controller 20 determines the ratio P of these currents -Iv and -Iw (S23a).

Specifically, the controller 20 calculates the ratio (current ratio) P of the backward currents -Iv and -Iw flowing through the two phase windings Lv and Lw as P = (-Iw / -Iv) if the relationship in magnitude is "-Iv ≥ -Iw", or as P = (-Iv / -Iw) if the relationship in magnitude is "-Iv < -Iw". When the calculated current ratio P is in a state of being at or below the set value X (YES in S23a), the controller 20 determines that there is a short-circuiting in any one of the phase windings Lu, Lv, and Lw, and adds "1" to the abnormality count value n (S24). Then, it proceeds to the determination of the current ratio in the next U-phase check (S25a).

When the calculated current ratio P is not in a state of being at or below the set value (NO in S23a), the controller 20 does not make any addition to the abnormality count value n and proceeds to the determination of the current ratio P in the next V-phase check (S25a).

### (Determination of current ratio P in X-phase check)

During the X-phase check, forward currents +Iv and +Iw flow through two phase windings Lv and Lw and one backward current -Iu flows through one phase winding Lu. The controller 20 determines the ratio P of these currents +Iv and +Iw (S25a).

Specifically, the controller 20 calculates the ratio (current ratio) P of the forward currents +Iv and +Iw flowing through the two phase windings Lv and Lw as P = (+Iw / +Iv) if the relationship in magnitude is "+Iv ≥ +Iw", or as P = (+Iv / +Iw) if the relationship in magnitude is "+Iv < +Iw". When the calculated current ratio P is in a state of being at or below the set value X (YES in S25a), the controller 20 determines that there is a short-circuiting in any one of the phase windings Lu, Lv, and Lw, and adds "1" to the abnormality count value n (S26). Then, it proceeds to the determination of the current ratio in the next U-phase check (S27a).

When the calculated current ratio P is not in a state of being at or below the set value (NO in S25a), the controller 20 does not make any addition to the abnormality count value n and proceeds to the determination of the current ratio P in the next V-phase check (S27a).

### (Determination of current ratio P in Y-phase check)

During the Y-phase check, forward currents +Iu and +Iw flow through two phase windings Lu and Lw and one backward current -Iv flows through one phase winding Lv. The controller 20 determines the ratio P of these currents +Iu and +Iw (S25a).

Specifically, the controller 20 calculates the ratio (current ratio) P of the forward currents +Iu and +Iw flowing through the two phase windings Lv and Lw as P = (+Iw / +Iu) if the relationship in magnitude is "+Iu ≥ +Iw", or as P = (+Iu / +Iw) if the relationship in magnitude is "+Iu < +Iw". When the calculated current ratio P is in a state of being at or below the set value X (YES in S27a), the controller 20 determines that there is a short-circuiting in any one of the phase windings Lu, Lv, and Lw, and adds "1" to the abnormality count value n (S28). Then, it proceeds to the determination of the current ratio in the next U-phase check (S29a).

When the calculated current ratio P is not in a state of being at or below the set value (NO in S27a), the controller 20 does not make any addition to the abnormality count value n and proceeds to the determination of the current ratio P in the next V-phase check (S29a).

### (Determination of current ratio P in Y-phase check)

During the Y-phase check, forward currents +Iu and +Iv flow through two phase windings Lu and Lv and one backward current -Iw flows through one phase winding Lw. The controller 20 determines the ratio P of these currents +Iu and +Iv (S29a).

Specifically, the controller 20 calculates the ratio (current ratio) P of the forward currents +Iu and +Iv flowing through the two phase windings Lu and Lv as P = (+Iv / +Iu) if the relationship in magnitude is "+Iu ≥ +Iv", or as P = (+Iu / +Iv) if the relationship in magnitude is "+Iu < +Iv". When the calculated current ratio P is in a state of being at or below the set value X (YES in S29a), the controller 20 determines that there is a short-circuiting in any one of the phase windings Lu, Lv, and Lw, and adds "1" to the abnormality count value n (S30). Then, it proceeds to the determination of the current ratio in the next U-phase check (S31).

When the calculated current ratio P is not in a state of being at or below the set value (NO in S29a), the controller 20 does not make any addition to the abnormality count value n and proceeds to the determination of the next abnormality count value n (S31).

### (Comparison between abnormality count value n and threshold A)

The controller 20 determines whether or not the final abnormality count value n is equal to or greater than the threshold value A (for example, "4" or greater) (S31). If the abnormality count value n is less than the threshold value A (NO in S31), the controller 20 determines that there is no short-circuiting in the phase windings Lu, Lv, and Lw and starts the motor M by switching of the switching circuit 2 (S16).

When the abnormality count value n is equal to or greater than the set value A (NO in S31), the controller 20 determines that there is a short-circuiting in any one of the phase windings Lu, Lv, and Lw, and keeps the stopped state of the motor M without starting it. Then, it notifies the user or the like, of the contents of the abnormality by, for example, display or communication (S17).

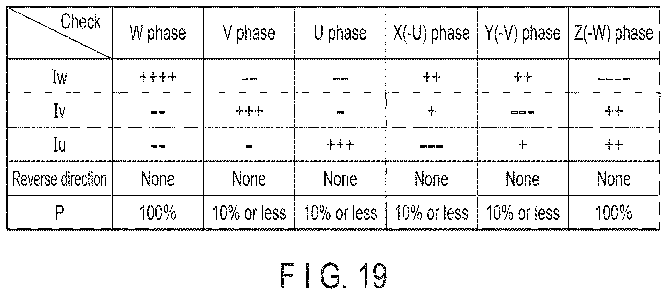

FIG. 19 shows the test results indicating the direction (+/-) and magnitude (the number of + signs/the number of - signs) of each of the currents Iu, Iv, and Iw flowing through the phase windings Lu, Lv, and Lw when there is a short-circuiting in the phase windings Lu, Lv, and Lw, whether or not there is an abnormal reverse flow in the two currents that normally flow in the same direction, and the state of the current ratio P between the two currents that normally flow in the same direction.

As described above, during phase checking, the current ratio P of the two currents that normally flow in the same direction among the currents Iu, Iv, and Iw is calculated for the execution of each phase check (formation of the first to sixth circuits), and the frequency at which the calculated current ratio P is equal to or less than the set value X (for example, 10% or less) is counted as the abnormality count value n. When the abnormality count value n is equal to or exceeds the threshold value A, it is determined that there is a short-circuiting in one of the phase windings Lu, Lv, or Lw. With this configuration, it is possible to appropriately detect a short-circuiting in the phase winding Lu, Lv, or Lw without being affected by the magnetic field of the permanent magnet or the like due to the motor being a three-phase brushless DC motor.

### [3] Third Embodiment

In each phase check, when the switch elements Tu to Tz and the motor M are normal, three currents Iu, Iv, and Iw flow between the switching circuit 2 and the phase windings Lu, Lv, and Lw. These three currents Iu, Iv, and Iw differ in flow direction (+/-) from one phase check to another and also differ in magnitude from one phase check to another.

In consideration of this point, the abnormality determination method of the determination section 20a in the third embodiment carries out, for example, the following. That is, among the results of the monitoring of the currents in each phase check, the magnitudes (absolute values) of the three currents Iu, Iv, and Iw flowing between the switching circuit 2 and the phase windings Lu, Lv, and Lw are relatively compared with each other and based on the comparison results, the abnormality in each of the switch elements Tu to Tz and the motor M is determined.

The control executed by the controller 20 will be described with reference to the flowchart in FIG. 2 as in the cases of the first and second embodiments. Note that details of the portions of the control similar to those of the first and second embodiments will be omitted.

### (W-phase check)

In the W-phase check (S2), the controller 20 sets the first conduction path for the W-phase check shown in FIG. 3 for a fixed time t, as in the cases of the first and second embodiments. With this setting, the current +Iw flow from the switching circuit 2 through the phase winding Lw towards the neutral point (connection terminal) C, and the current +Iw that has passed through the phase winding Lw is split into currents flowing through the phase winding Lv and phase winding Lu. The split currents become currents -Iv (= Iy) and -Iu (= Ix) flowing toward the switching circuit 2 through the phase windings Lv and Lu.

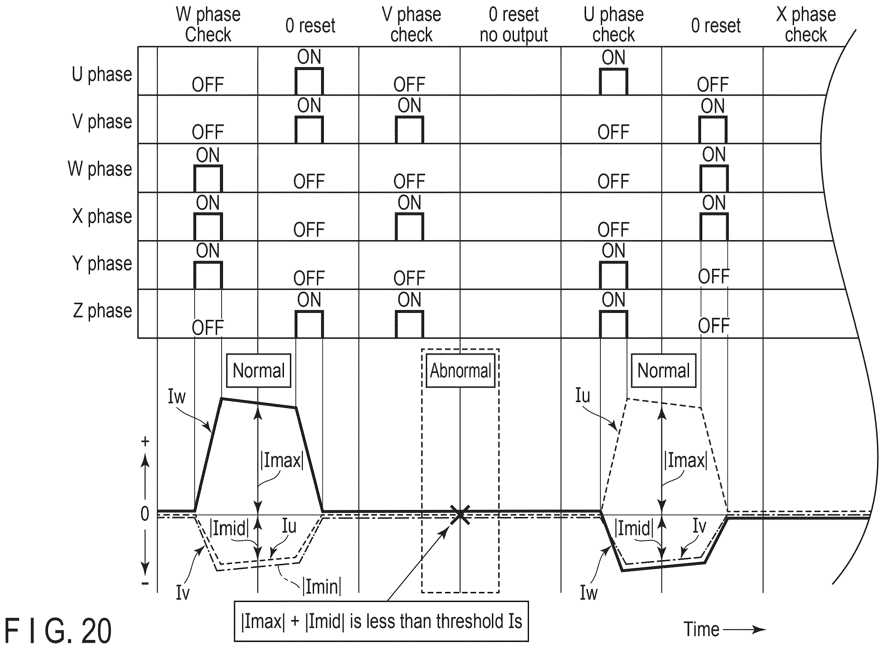

The directions (+, -) and magnitudes of the currents Iw, Iv, and Iu are shown in FIG. 20. The current +Iw has a maximum value Imax, and of the currents -Iv and -Iu, for example, the current -Iv has a minimum value Imin, and the current -Iu has an intermediate value Imid. The controller 20 monitors the states of the currents Iw, Iv, and Iu using the current sensors 3a, 3b, and 3c, and stores the results of the monitoring in the internal memory 20m.

During this monitoring, the controller 20 calculates a sum Ia of the absolute value |Imax| of the current +Iw, which is the maximum value Imax, and the absolute value |Imid| of the current -Iu, which is the intermediate value Imid, (= |Imax| + |Imid|), and stores the calculated sum (referred to as the total value) Ia in the internal memory 20m. Then, the controller 20 determines whether the total value Ia is in a state of being below the threshold value Is (S2a).

When the total value Ia is below the threshold value Is (Ia < Is) (YES in S2a), the controller 20 determines that there is an abnormality and comprehensively determines the contents of the abnormality in the subsequent determination process (S14). Then, the controller 20 omits the 0-reset operation of the W-phase and proceeds to the next V-phase check (S4). When the total value Ia is equal to or greater than the threshold value Is (NO in S2a), the controller 20 executes a 0-reset operation for the W-phase check (S3). After this 0-reset operation, the controller 20 proceeds to the next V-phase check (S4).

Note that in this third embodiment, since the total value Ia of the two currents is used, a threshold value Is larger than the threshold value Is used in the first and second embodiments is used.

### (V-phase check)

In the V-phase check (S4), the controller 20 sets the second conduction path for the W-phase check shown in FIG. 4 for a fixed time t, as in the cases of the first and second embodiments. With this setting, the current +Iv flow from the switching circuit 2 through the phase winding Lv towards the neutral point (connection terminal) C, and the current +Iv that has passed through the phase winding Lv is split into currents flowing through the phase winding Lw and phase winding Lu. The split currents become currents -Iw (= Iz) and -Iu (= Ix) flowing toward the switching circuit 2 through the phase windings Lw and Lu.

Note that in the event of an abnormality, as shown in FIG. 20, the currents Iv, Iw, and Iu remain near zero. The controller 20 monitors the states of the currents Iv, Iw, and Iu using the current sensors 3a, 3b, and 3c, and stores the results of the monitoring in the internal memory 20m.

During this monitoring, the controller 20 calculates a total value Ia of the absolute value |Imax| of the current which is the maximum value Imax, and the absolute value |Imid| of the current which is the intermediate value Imid, and stores the calculated sum Ia in the internal memory 20m. Then, the controller 20 determines whether or not the total value Ia is in a state of being below the threshold value Is (S4a).

When the total value Ia is below the threshold value Is (Ia < Is) (YES in S4a), the controller 20 determines that there is an abnormality and comprehensively determines the contents of the abnormality in the subsequent determination process (S14). Then, the controller 20 proceeds to the next U-phase check (S6). When the total value Ia is equal to or greater than the threshold value Is (NO in S4a), the controller 20 executes a 0-reset operation for the V-phase check (S5). After this 0-reset operation, the controller 20 proceeds to the next U-phase check (S6).

### (U-phase check)

In the U-phase check (S6), the controller 20 sets the third conduction path for the W-phase check shown in FIG. 5 for a fixed time t, as in the cases of the first and second embodiments. With this setting, the current +Iu flow from the switching circuit 2 through the phase winding Lu towards the neutral point (connection terminal) C, and the current +Iu that has passed through the phase winding Lu is split into currents flowing through the phase winding Lw and phase winding Lv. The split currents become currents -Iw (= Iz) and -Iv (= Iy) flowing toward the switching circuit 2 through the phase windings Lw and Lv.

In the U-phase check, as shown in FIG. 20, the current +Iu has a maximum value Imax, and of the currents -Iw and -Iu, for example, the current -Iw has a minimum value Imin, and the current -Iv has an intermediate value Imid. The controller 20 monitors the states of the currents Iw, Iv, and Iu using the current sensors 3a, 3b, and 3c, and stores the results of the monitoring in the internal memory 20m.

During this monitoring, the controller 20 calculates a sum Ia of the absolute value |Imax| of the current +Iu, which is the maximum value Imax, and the absolute value |Imid| of the current -Iv, which is the intermediate value Imid, and stores the total value Ia in the internal memory 20m. Then, the controller 20 determines whether the total value Ia is in a state of being below the threshold value Is (S6a).

When the total value Ia is below the threshold value Is (YES in S6a), the controller 20 determines that there is an abnormality and comprehensively determines the contents of the abnormality in the subsequent determination process (S14). Then, the controller 20 proceeds to the next X-phase check (S8). When the total value Ia is equal to or greater than the threshold value Is (NO in S6a), the controller 20 executes a 0-reset operation for the U-phase check (S7). After this 0-reset operation, the controller 20 proceeds to the next X-phase check (S8).

### (X-phase check to Y-phase check)

The controller 20 executes processing similar to those of the W-check to U-phase check in the X-phase check (S8) to Y-phase check (S12) as well.

### (Determination process)

In the determination process (S14), the controller 20 determines whether there is an abnormality in each of the switch elements Tu to Tz based on the results of the monitoring of the current at each phase check stored in the internal memory 20m.

In the example shown in FIG. 20, the total value Ia (= |Imax| + |Imid|) in the V-phase check is less than the threshold Is. In this case, the controller 20 determines that there is an open abnormality in the switch element Tv (NO in S15). Based on the determination of the abnormality in S15, the controller 20 keeps the stopped state of the motor M without starting it, and notifies the contents of the abnormality to an external unit by, for example, display or communication (S17 in FIG. 3).

When the total value Ia is greater than the threshold value Is in all phase checks, the controller 20 determines that there is no open abnormality in all of the switch elements Tu to Tz (YES in S15). Subsequently, the determination of short-circuiting abnormality in phase windings Lu, Lv, and Lw shown in FIG. 3 is performed in a manner similar to that of the first and second embodiments. As described above, by relatively comparing the magnitudes (absolute values) of the currents flowing between the switching circuit 2 and the phase windings Lu, Lv, and Lw, it is possible to accurately and appropriately determine abnormalities in the switch elements Tu to Tz even when the currents Iu, Iv, and Iw during each phase check are not significantly large due to the influence of the states of the phase windings Lu, Lv, and Lw.

When the currents Iu, Iv, and Iw during phase checks do not become significantly large due to the influence of the states of the phase windings Lu, Lv, and Lw and the like, it may become difficult to make an appropriate determination of abnormality merely by comparing one of the currents Iu, Iv, and Iw with the threshold value Is. In this embodiment, such a drawback is not raised.

Note that this embodiment is configured to compare the total value Ia of the absolute value |Imax| of the current having the maximum value Imax and the absolute value |Imid| of the current having the intermediate value Imid (Ia (= |Imax| + |Imid|) with the threshold value Is. But it may as well be configured to compare the total value Ia of the absolute value |Imax| of the current having the maximum value Imax and the absolute value |Imin| of the current having the minimum value Imin (Ia (= |Imax| + |Imin|) with the threshold value Is. Furthermore, it may as well be configured to compare the total of the absolute values of the three currents Iu, Iv, and Iw (= |Imax| + |Imid| + |Imin|) with the threshold value Is.

### [4] Fourth Embodiment

In the fourth embodiment, the controller 20 sets the execution time of the 0-reset operation as a variable time depending on the situation, rather than a fixed time t as in the first and second embodiments. Further, the controller 20 detects a short-circuiting caused by insulation failure or the like in the phase windings Lu, Lv, and Lw as an abnormality of the phase windings Lu, Lv, and Lw of the motor M. The other configurations are the same as those in the first and second embodiments.

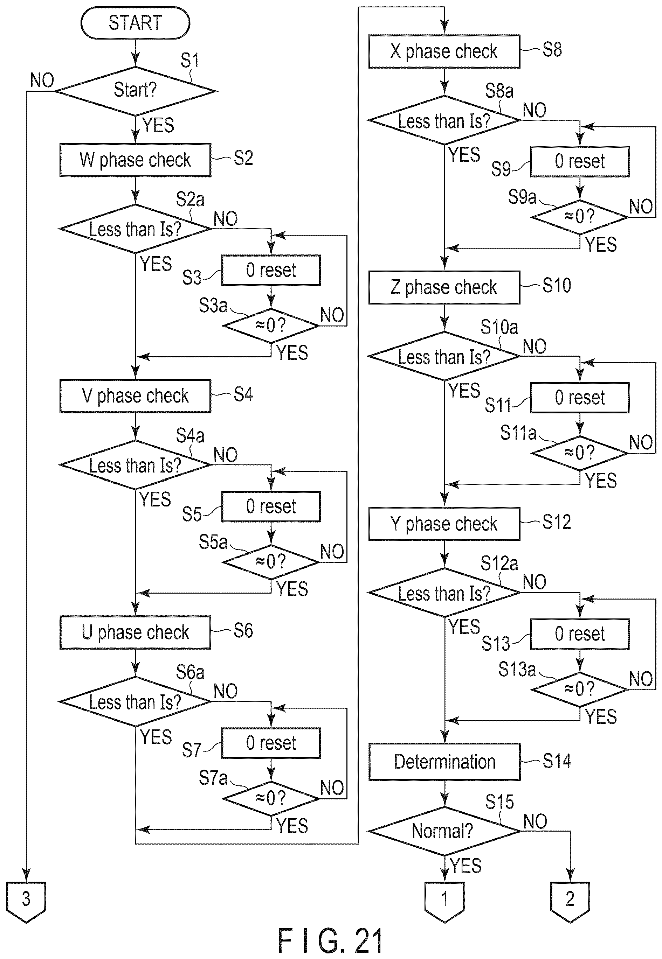

The control executed by the controller 20 is shown in the flowchart of FIG. 21.

### (W-phase check to Y-phase check)

When, in the W-phase check (S2), any one of the currents Iu, Iv, and Iw flowing between the switching circuit 2 and the motor M is in a state of being equal to or above the threshold value Is (NO in S2a), the controller 20 starts a 0-reset operation (S3), and monitors whether or not the current flowing between the switching circuit 2 and the motor M has attenuated to 0 or its vicinity (S3a). One of the current Iu, Iv, and Iw flowing between the switching circuit 2 and the motor M should preferably be the absolute value |Imax| of the largest current Iw.

In the situation where the absolute value |Imax| of the current Iw has not attenuated to 0 or its vicinity (NO in S3a), the controller 20 continues the 0-reset operation (S3). When the absolute value |Imax| of the current Iw has attenuated to 0 or its vicinity (YES in S3a), the controller 20 proceeds to the next V-phase check (S4).

When the absolute value |Imax| of the current Iw is less than the threshold Is (YES in S2a), the controller 20 determines that there is an abnormality and comprehensively determines the contents of the abnormality in the subsequent determination process (S14). In this case, the current Iw is not flowing or is sufficiently small even if it is flowing, and therefore the controller 20 determines that it does not perform the 0-reset operation to attenuate the current and proceeds to the next V-phase check (S4).

In the subsequent V-phase check to Y-phase check as well, the controller 20 executes determinations (S5a, S7a, S9a, S11a, and S13a) similar to that of the determination in the W-phase check (S3a).

### [5] Modified example

The above-provided embodiments are explained based on example cases where the phase checks are performed in the order of the W-phase, V-phase, U-phase, X-phase, Z-phase, and Y-phase, but the order is not particularly limited thereto.

Each of the above-provided embodiments is configured to detect the current flowing between the switching circuit 2 and the motor M with the current sensors 3a, 3b, and 3c. But it may as well be, as indicated by the dashed lines in FIG. 1, configured to insert shunt resistors Ra, Rb, and Rc into the conduction paths of the switching elements Tx, Ty, and Tz, for connection, and detect the presence or absence of current in each conduction path based on the voltages generated in these shunt resistors Ra, Rb, and Rc.

Apart from the above, the embodiments and modifications provided above are presented as examples and are not intended to limit the scope of the invention. These embodiments and modifications may be implemented in various other forms, and various omissions, rewrites, and modifications may be made within the scope of the invention without departing from the essence of the invention. The accompanying claims and their equivalents are intended to cover such forms or modifications as would fall within the scope and spirit of the inventions.

### Reference Signs List

1 ... motor drive device, 2 ... switching circuit, 3a, 3b, 3c ... current sensors, M ... motor, 20 ... controller, 20a ... determination section, 20b ... first control section, 20c ... second control section, phase windings ... Lu, Lv, Lw.

## Claims

1. A motor drive device connected to a motor including a plurality of phase windings, the device comprising:
a switching circuit including a plurality of series circuits of switch elements located on an upstream side along a direction of application of direct current voltage and switch elements located on a downstream side, the phase windings being connected to interconnection points of the respective switch elements in the series circuits; and
a controller which controls the switching circuit,
wherein
the controller sequentially switches a plurality of conduction paths through which current flows in a predetermined direction of the respective phase winding via each switch element, and determines whether there is a short-circuiting in each phase winding based on a state of the current flowing between the switching circuit and the motor at that time.

2. The motor drive device according to claim 1, wherein
the controller determines whether there is abnormality in each of the switch elements and whether there is a short-circuiting in each of the phase windings based on the state of the current flowing between the switching circuit and the motor.

3. The motor drive device according to claim 1, wherein
the controller determines whether there is a flow of a reverse direction different from normal in either one of two currents which normally flow in a same direction, among the currents flowing in the phase windings, for formation of each of the conduction paths, and determines that there is a short-circuiting in any one of the phase windings when a frequency of occurrence of the flow in the reverse direction is equal to or greater than a set value.

4. The motor drive device according to claim 1, wherein
the controller calculates a ratio of two currents that normally flow in the same direction among the currents flowing in the phase windings, and when a frequency at which the calculated ratio is equal to or less than a set value, determines that there is a short-circuiting in any one of the phase windings.

5. The motor drive device according to claim 1, wherein
the controller applies a counterphase voltage for canceling the current flowing between the switching circuit and the motor to each of the phase windings through the respective switch elements before switching each of the conduction paths.

6. The motor drive device according to claim 1, wherein
the controller applies a counterphase voltage for canceling the current flowing between the switching circuit and the motor to each of the phase windings through the respective switch elements before switching each of the conduction paths for a time duration a same as a set time for the conduction paths set immediately before the switching thereof.

7. The motor drive device according to claim 1, wherein
the controller applies a counterphase voltage for canceling the current flowing between the switching circuit and the motor to each of the phase windings through the respective switch elements before switching each of the conduction paths, only when the current flowing between the switching circuit and the motor is equal to or greater than a threshold value.

8. The motor drive device according to claim 1, wherein
the controller applies a counterphase voltage for canceling the current flowing between the switching circuit and the motor to each of the phase windings through the respective switch elements before switching each of the conduction paths, only when the current flowing between the switching circuit and the motor is equal to or greater than a threshold value, until the current flowing between the switching circuit and the motor becomes 0 or a vicinity thereof.

9. The motor drive device according to claim 1, wherein
the controller executes the determination before starting the motor, and starts the motor when a result of the determination is normal, and does not start the motor when the result of the determination is abnormal.

10. The motor drive device according to any one of claims 1 to 9, wherein
the motor is a brushless DC motor comprising a stator in which the plurality of phase windings are wound and a rotor including permanent magnets.
